# EUROPEAN PATENT APPLICATION

(11) **EP 4 583 512 A1**
(43) Date of publication of application: **09.07.2025**
(21) Application number: 23860957.2
(22) Date of filing: 04.09.2023
(51) Int. Cl.: H04N 19/70, H04N 19/105, H04N 19/184

(54) **IMAGE ENCODING/DECODING METHOD, METHOD OF TRANSMITTING BITSTREAM, AND RECORDING MEDIUM IN WHICH BITSTREAM IS STORED**

(30) Priority: 04.09.2022 US 202263403779 P; 04.09.2022 US 202263403780 P
(71) Applicant: LG Electronics Inc., Yeongdeungpo-gu Seoul 07336 (KR)
(72) Inventor: TAN, Hendry, Seoul 06772 (KR)
(74) Representative: Frenkel, Matthias Alexander
(86) International application number: PCT/KR2023/013159
(87) International publication number: WO 2024/049282

(57) **Abstract**

An image encoding/decoding method, a bitstream transmission method, and a computer-readable recording medium for storing a bitstream are provided. The image decoding method according to the present disclosure may be an image decoding method performed by an image decoding device, the method comprising the steps of: obtaining a supplemental enhancement information (SEI) message for an extended dependent random access point (EDRAP) picture from a bitstream, and on the basis of the SEI message, identifying a leading picture following the EDRAP picture in the decoding order and preceding the EDRAP picture in the output order, wherein the leading picture comprises at least one of a decodable leading picture and an undecodable leading picture.

## Description

### Technical Field

The present disclosure relates to an image encoding/decoding method, a method of transmitting a bitstream and a recording medium storing a bitstream, and, more particularly, to an image encoding/decoding method and apparatus based on a method of identifying a leading picture, a method of transmitting a bitstream and a recording medium storing a bitstream.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to propose a method of identifying a leading picture.

In addition, an object of the present disclosure is to apply various constraints on the decoding order and output order of a leading picture.

In addition, an object of the present disclosure is to propose a definition for a decodable leading picture and a non-decodable leading picture.

In addition, an object of the present disclosure is to provide a mixture of decodable leading pictures and non-decodable leading pictures.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise obtaining a supplemental enhancement information (SEI) message for an extended dependent random access point (EDRAP) picture from a bitstream and identifying a leading picture following the EDRAP picture in decoding order and preceding the EDRAP picture in output order, based on the SEI message. The leading picture may comprise at least one of a decodable leading picture or a non-decodable leading picture.

An image encoding method according to another aspect of the present disclosure is an image encoding method performed by an image encoding apparatus. The image encoding method may comprise identifying a leading picture following an extended dependent random access point (EDRAP) picture in decoding order and preceding the EDRAP picture in output order and encoding a supplemental enhancement information (SEI) message for the EDRAP picture based on a result of identifying the leading picture. The leading picture may comprise at least one of a decodable leading picture or a non-decodable leading picture.

A computer-readable recording medium according to another aspect of the present disclosure can store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description below of the present disclosure, and do not limit the scope of the present disclosure.

### Advantageous Effects

According to the present disclosure, it is possible to provide an image encoding/decoding method and apparatus with improved encoding/decoding efficiency.

In addition, according to the present disclosure, a method of identifying whether it is a leading picture can be simplified.

In addition, according to the present disclosure, a mixture of decodable leading pictures and non-decodable leading pictures can be allowed.

Also, according to the present disclosure, it is possible to provide a non-transitory computer-readable recording medium storing a bitstream generated by an image encoding method according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

### Description of Drawings

FIG. 1 is a view schematically showing a video coding system, to which an embodiment of the present disclosure is applicable.
FIG. 2 is a view schematically showing an image encoding apparatus, to which an embodiment of the present disclosure is applicable.
FIG. 3 is a view schematically showing an image decoding apparatus, to which an embodiment of the present disclosure is applicable.
FIG. 4 shows an example of a coding layer and structure to which an embodiment of the present disclosure is applicable.
FIG. 5 is a flowchart illustrating an image encoding method according to an embodiment of the present disclosure.
FIG. 6 is a flowchart illustrating an image decoding method according to an embodiment of the present disclosure.
FIG. 7 is a flowchart illustrating an image encoding method according to another embodiment of the present disclosure.
FIG. 8 is a flowchart illustrating an image decoding method according to another embodiment of the present disclosure.
FIG. 9 is a flowchart illustrating an image encoding method according to another embodiment of the present disclosure.
FIG. 10 is a flowchart illustrating an image decoding method according to another embodiment of the present disclosure.
FIG. 11 is a view showing a content streaming system to which an embodiment of the present disclosure is applicable.

### Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

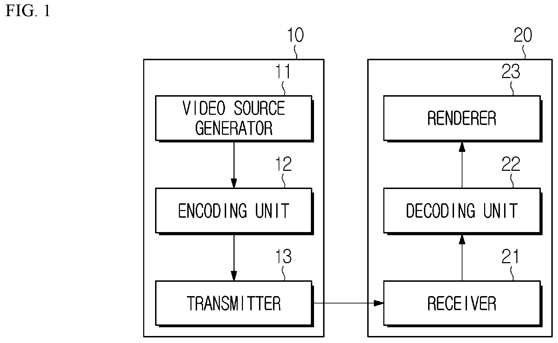

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

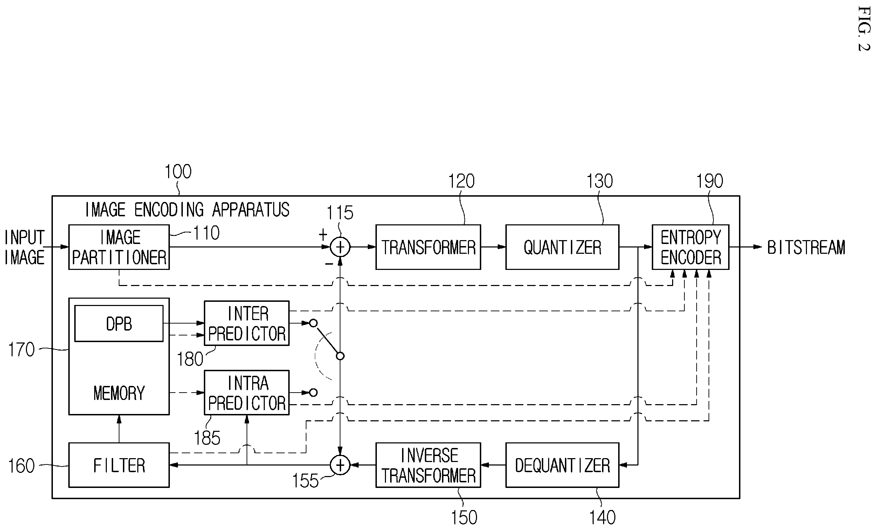

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

**Overview of image decoding apparatus**

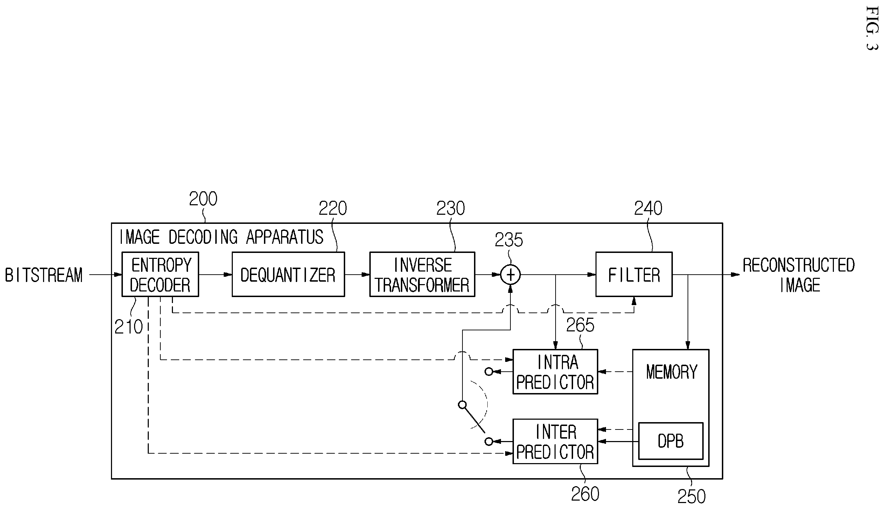

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

### Coding layer and structure

A coded video/image of the present disclosure may be processed according to, for example, a coding layer and structure to be described later.

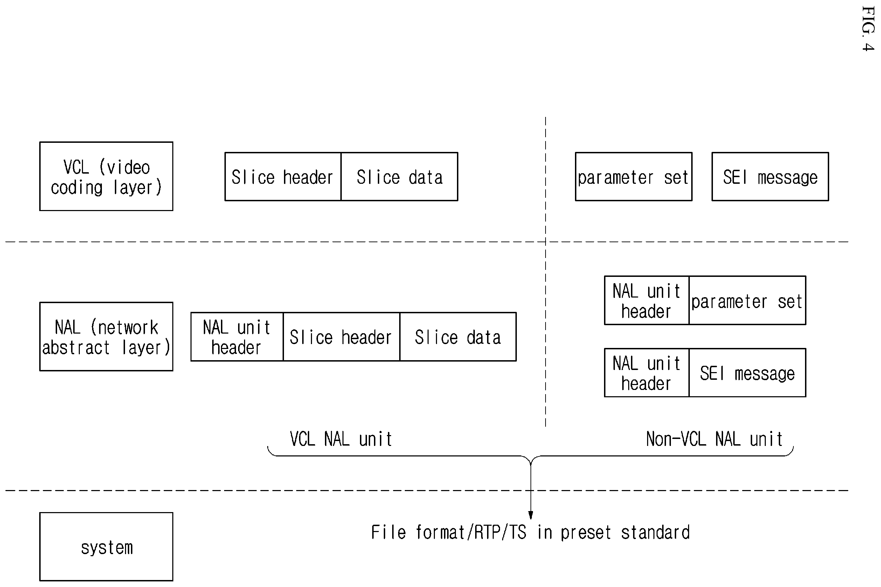

FIG. 4 is a diagram illustrating a hierarchical structure for a coded image.

The coded image is classified into a video coding layer (VCL) for an image decoding process and handling itself, a lower system for transmitting and storing encoded information, and a network abstraction layer (NAL) present between the VCL and the lower system and responsible for a network adaptation function.

In the VCL, VCL data including compressed image data (slice data) may be generated or a parameter set including information such as a picture parameter set (PPS), a sequence parameter set (SPS) or a video parameter set (VPS) or a supplemental enhancement information (SEI) message additionally required for a decoding process of an image may be generated.

In the NAL, header information (NAL unit header) may be added to a raw byte sequence payload (RBSP) generated in the VCL to generate a NAL unit. In this case, the RBSP refers to slice data, a parameter set, an SEI message generated in the VCL. The NAL unit header may include NAL unit type information specified according to RBSP data included in a corresponding NAL unit.

As shown in FIG. 4, the NAL unit may be classified into a VCL NAL unit and a non-VCL NAL unit according to the RBSP generated in the VCL. The VCL NAL unit may mean a NAL unit including information on an image (slice data), and the Non-VCL NAL unit may mean a NAL unit including information (parameter set or SEI message) required to decode an image.

The VCL NAL unit and the Non-VCL NAL unit may be attached with header information and transmitted through a network according to the data format of the lower system. For example, the NAL unit may be modified into data having a predetermined data format, such as H.266/VVC file format, RTP (Real-time Transport Protocol) or TS (Transport Stream), and transmitted through various networks.

As described above, in the NAL unit, a NAL unit type may be specified according to the RBSP data structure included in the corresponding NAL unit, and information on the NAL unit type may be stored in a NAL unit header and signaled.

For example, a NAL unit may be broadly classified into a VCL NAL unit type and a non-VCL NAL unit type depending on whether it contains information about a picture (slice data). The VCL NAL unit type may be classified according to the property and type of the picture included in the VCL NAL unit, and the non-VCL NAL unit type may be classified according to the type of parameter set, etc.

Below is an example of a NAL unit type specified according to the type of parameter set included in the non-VCL NAL unit type.
- APS (Adaptation Parameter Set) NAL unit : Type for NAL unit containing APS
- DPS (Decoding Parameter Set) NAL unit : Type for NAL unit containing DPS
- VPS (Video Parameter Set) NAL unit: Type for NAL unit containing VPS
- SPS (Sequence Parameter Set) NAL unit: Type for NAL unit containing SPS
- PPS (Picture Parameter Set) NAL unit: Type for NAL unit containing PPS

The above-described NAL unit types may have syntax information on the NAL unit types, and the syntax information may be stored in a NAL unit header and signaled. For example, the syntax information may include nal_unit_type, and the NAL unit types may be specified by a nal_unit_type value.

The slice header (slice header syntax) may include information/parameters that may be commonly applied to the slice. The APS (APS syntax) or PPS (PPS syntax) may include information/parameters that may be commonly applied to one or more slices or pictures. The SPS (SPS syntax) may include information/parameters that may be commonly applied to one or more sequences. The VPS (VPS syntax) may include information/parameters that may be commonly applied to multiple layers. The DPS (DPS syntax) may include information/parameters that may be commonly applied to the entire video. The DPS may include information/parameters related to concatenation of CVS (coded video sequence). In this document, high level syntax (HLS) may include at least one of the APS syntax, PPS syntax, SPS syntax, VPS syntax, DPS syntax, or slice header syntax.

In the present disclosure, image/video information encoded and signaled in the form of a bitstream from the image encoding apparatus 100 to the image decoding apparatus 200 may include information related to partitioning within a picture, intra/inter prediction information, residual information, in-loop filtering information, etc., as well as information included in the slice header, information included in the APS, information included in the PPS, information included in the SPS, and/or information included in the VPS.

### SEI message

DRAP (Dependent Random Access Point)

A DRAP picture may only refer to a previous IRAP (Intra Random Access Point) picture, and may be an inter-coded picture that provides a random access point to a bitstream of the DRAP picture when the IRAP picture is available. The DRAP picture may be indicated in the bitstream by an SEI message.

A picture associated with a DRAP indication SEI message may be referred to as a DRAP picture, and an example of a DRAP indication SEI message is shown in Table 1.

**[Table 1]**

| | |
|---|---|
| dependent_rap_indication(payloadSize ) { | Descriptor |
| } | |

The presence of a DRAP indication SEI message may indicate constraints on the reference to a picture and the order of the pictures. These constraints may enable the image decoding device 200 to properly decode the DRAP picture. Furthermore, these constraints may enable the image decoding device 200 to properly decode pictures that follow in both decoding order and output order while being present in the same layer without having to decode any other pictures of the same layer except for the related IRAP picture of the DRAP picture.

The constraints indicated by the presence of the DRAP indication SEI message may be as follows:
- A DRAP picture is a trailing picture.
- A DRAP picture has a temporal sublayer identifier equal to 0.
- A DRAP picture does not include any picture being present in the same layer in the active entry of the reference picture list, except for the associated IRAP picture of the DRAP picture.
- Any picture being present in the same layer and following the DRAP picture in both decoding order and output order does not include any picture being present in the same layer and preceding the DRAP picture in either decoding order or output order, except for the associated IRAP picture of the DRAP picture, in the active entry of the reference picture list.

### EDRAP (Extended DRAP)

An EDRAP picture may be a DRAP picture that depends only on some pictures in a picture set. The picture set may consist of an associated IRAP picture, and a specific EDRAP picture between the associated IRAP picture and the specific EDRAP picture in decoding order. An EDRAP picture may be used as a random access point as long as a dependent IRAP picture or EDRAP picture is provided.

A picture associated with an EDRAP indication SEI message may be referred to as an EDRAP picture.

The presence of an EDRAP indication SEI message may indicate constraints on a reference to a picture and the order of pictures. These constraints may enable the image decoding apparatus 200 to properly decode the EDRAP picture. Furthermore, these constraints may enable the image decoding apparatus 200 to properly decode pictures that follow in both decoding order and output order while being present in the same layer without having to decode any other pictures of the same layer except for the list of pictures referenceablePictures. Here, the list of pictures referenceablePictures may be composed of a list of IRAP or EDRAP pictures in decoding order that are present in the same coded layer video sequence (CLVS) and are identified by the edrap_ref_rap_id[i] syntax element.

The constraints indicated by the presence of the EDRAP indication SEI message may be as follows:
- An EDRAP picture is a trailing picture.
- An EDRAP picture has a temporal sublayer identifier equal to 0.
- An EDRAP picture does not include any picture present in the same layer in the active entry of the reference picture list, except for referenceablePictures.
- Any picture that is present in the same layer and follows an EDRAP picture in both decoding order and output order does not include a picture that is present in the same layer and precedes an EDRAP picture in decoding order or output order in the active entry of the reference picture list, except for referenceablePictures.
- A picture included in referenceablePictures does not include a picture that is present in the same layer but is not present at an earlier position in referenceablePictures, in the active entry of the reference picture list. Therefore, the first picture in referenceablePictures does not include a picture from the same layer in the active entry of the reference picture list, even if the picture is an EDRAP picture rather than an IRAP picture.

An example of an EDRAP indication SEI message is shown in Table 2.

**[Table 2]**

| | |
|---|---|
| extended_drap_indication( payloadSize) { | **Descriptor** |
| **edrap_rap_id_minus1** | u(16) |
| **edrap_1eading_pictures_decodable_flag** | u(1) |
| **edrap_reserved_zero_12bits** | u(12) |
| **edrap_num_ref_rap_pics_minus1** | u(3) |
| for(i= 0; i <= edrap_num_ref_rap_pics_minus1; i++ ) | |
| **edrap_ref_rap_id**[ i ] | u(16) |
| } | |

The value of edrap_rap_id_minus1 plus 1 represents the RAP picture identifier RapPicId of the EDRAP picture. Each IRAP or EDRAP picture is associated with a RapPicId. The RapPicId value of an IRAP picture may be inferred to be 0. The RapPicId values of any two EDRAP pictures associated with the same IRAP picture shall be different.

edrap_leading_pictures_decodable_flag equal to 1 indicates that all of the constraints below apply.
- A picture that is present in the same layer and follows an EDRAP picture in decoding order shall follow, in output order, a picture that is present in the same layer and precedes an EDRAP picture in decoding order.
- A picture that is present in the same layer and follows an EDRAP picture in decoding order but precedes an EDRAP picture in output order shall not include a picture that is present in the same layer and precedes an EDRAP picture in decoding order in the active entry of the reference picture list, except for referenceablePictures.

edrap_leading_pictures_decodable_flag equal to 0 does not impose the above constraints.

The value of edrap_reserved_zero_12bits shall be equal to 0 in the bitstream. Other values of edrap_reserved_zero_12bits are reserved for future definition, and the image decoding apparatus 200 shall ignore the value of edrap_reserved_zero_12bits.

The value of edrap_num_refrap_pics_minus1 plus 1 represents the number of IRAP or EDRAP pictures that are present in the same CLVS as the EDRAP picture and may be included in the active entry of the reference picture list of the EDRAP picture.

edrap_ref_rap_id[ i ] represents the RapPicId of the i-th RAP picture that may be included in the active entry of the reference picture list of the EDRAP picture. The i-th RAP picture shall be an IRAP picture associated with the current EDRAP picture, or an EDRAP picture associated with the same IRAP picture as the current EDRAP picture.

### Embodiment

According to the current EDRAP SEI message, a picture indicated as an EDRAP picture may be associated with a leading picture. A leading picture is a picture that follows an EDRAP picture in decoding order but precedes the EDRAP picture in output order. The associated leading pictures indicated as the EDRAP picture may be either decodable leading pictures or non-decodable leading pictures. Whether an EDRAP picture is decodable or not may be indicated by a flag edrap_leading_pictures_decodable_flag signaled in the EDRAP SEI message.

If the decoding process starts from an EDRAP picture (i.e., random access from an EDRAP picture), the leading pictures associated with the non-decodable EDRAP pictures need to be removed from a bitstream for decoding. Considering this, the current design for the leading pictures associated with EDRAP pictures may have the following problems:
1. The flag edrap_leading_pictures_decodable_flag only indicates that the leading pictures associated with an EDRAP picture are decodable, not how many leading pictures are associated with the EDRAP picture. When performing random access from an EDRAP picture where non-decodable leading pictures shall be removed, the only way to identify whether pictures following the EDRAP picture in decoding order are leading pictures is to derive the POCs of the pictures until the first non-leading picture associated with the EDRAP is found. This is quite different from removing non-decodable pictures associated with CRA (i.e., RSAL pictures), because such pictures are easily recognized from the NAL unit header.
2. In the current design, whether all leading pictures associated with an EDRAP picture are decodable or not is represented in binary. It may be desirable to allow mixing of decodable and non-decodable leading pictures, such as RASL and RADL pictures associated with a CRA picture. Allowing identification of leading pictures associated with an EDRAP picture without the need to derive a POC value may allow mixing of decodable and non-decodable leading pictures associated with an EDRAP picture without any cost.
3. Additionally, signaling information in the EDRAP SEI message to indicate the type of leading picture associated with the EDRAP picture may have problems in case of bitstream thinning. For example, pictures in higher temporal sublayers may be removed from the bitstream, and the removed pictures may include the leading picture associated with the EDRAP picture. In such a situation, after removing some pictures, the EDRAP SEI message needs to be updated to ensure that it contains the correct information about the associated leading picture.

To solve the problems described above, the present disclosure proposes various embodiments. The embodiments described below may be performed individually, or may be performed by a combination of two or more embodiments.

First, the embodiments proposed through the present disclosure are summarized as follows.
1. When random access is performed from an EDRAP picture, the EDRAP picture may be associated with zero or more leading pictures that are decodable or non-decodable.
   a. A decodable leading picture associated with an EDRAP picture may be referred to as a DADL picture (DRAP-decodable leading picture).
   b. A non-decodable leading picture associated with an EDRAP picture may be referred to as a DASL picture (DRAP-skipped leading picture).
2. Any DASL picture associated with an EDRAP picture shall precede the DADL picture associated with the EDRAP picture in output order.
3. Any DADL picture associated with an EDRAP picture shall not refer to any DASL picture associated with the EDRAP picture or any picture that precedes the EDRAP picture in decoding order, except for referenceablePictures.
4. Any picture that follows the EDRAP picture in both decoding order and output order shall not refer to a DASL picture associated with the EDRAP picture or a picture that precedes the EDRAP picture in decoding order, except for referenceablePictures.
5. A new SEI message is used to indicate the picture as a DASL picture. This SEI message may be referred to as a DASL Indication SEI message.
6. A new SEI message is used to indicate the picture as a DADL picture. This SEI message may be referred to as a DADL indication SEI message.
7. Alternatively, a new SEI message is used to indicate the picture as a leading picture associated with an EDRAP picture. This SEI message may be referred to as an EDRAP leading picture SEI message. The SEI message includes a flag indicating the leading picture type of the picture (i.e., a DADL picture or a DASL picture).
8. Instead of signaling edrap_leading_pictures_decodable_flag, that flag is changed to indicate whether the indicated EDRAP picture has an associated leading picture. The flag may be changed to edrap_leading_pictures_present_flag.
9. If edrap_leading_pictures_present_flag is 1, the following information may be additionally signaled:
   a. Number of leading pictures associated with an EDRAP picture
   b. Number of non-decodable leading pictures
   c. Number of decodable leading pictures
   d. Flags for identifying the types of the leading pictures, when decodable and non-decodable leading pictures are mixed
10. Alternatively, a 2-bit indication is used to indicate:
   a. First value: The indicated EDRAP picture has no associated leading pictures
   b. Second value: The indicated EDRAP picture has one or more associated leading pictures, and all associated leading pictures are decodable leading pictures.
   c. Third value: The indicated EDRAP picture has one or more associated leading pictures, and all associated leading pictures are non-decodable leading pictures.
   d. Fourth value: The indicated EDRAP picture has one or more associated leading pictures, and the associated leading pictures are a mixture of non-decodable and decodable leading pictures.
10. If the value of the 2-bit indication is not the first value, the following information is additionally signaled:
   a. Number of leading pictures
   b. If the value of the 2-bit indication is equal to the fourth value, flags for indicating the type of leading pictures
11. If leading pictures associated with an EDRAP picture are removed from the bitstream due to bitstream extraction/thinning (i.e., removal of pictures of higher temporal sublayers), the EDRAP SEI message associated with the EDRAP picture needs to be updated to ensure correct signaling of the leading pictures.

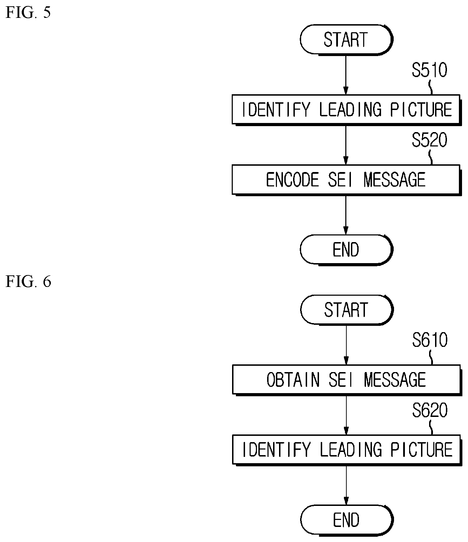

FIG. 5 is a flowchart illustrating an image encoding method according to an embodiment of the present disclosure, and FIG. 6 is a flowchart illustrating an image decoding method according to an embodiment of the present disclosure.

Referring to FIG. 5, the image encoding apparatus 100 may identify a leading picture (S510). The leading picture may be a picture associated with an EDRAP picture. In addition, the leading picture may be a picture that precedes the EDRAP picture in decoding order but follows the EDRAP picture in output order. The leading picture may include at least one of a decodable leading picture (DADL picture) or a non-decodable leading picture (DASL picture).

The image encoding apparatus 100 may encode an SEI message based on a result of identifying the leading picture (S520). The SEI message may be an SEI message for an EDRAP picture. That is, the SEI message may be an EDRAP SEI message associated with an EDRAP picture. The result of identifying the leading picture may be a determination result on whether a leading picture is present, the number of leading pictures, the type of the leading picture (DADL picture or DASL picture), etc.

Referring to FIG. 6, the image decoding apparatus 200 may obtain an SEI message from a bitstream (S610). The SEI message may be an SEI message for an EDRAP picture. That is, the SEI message may be an EDRAP SEI message associated with an EDRAP picture. The result of identifying the leading picture may be a determination result on whether a leading picture is present, the number of leading pictures, the type of the leading picture (DADL picture or DASL picture), etc.

The image decoding apparatus 200 may identify a leading picture based on the SEI message (S620). The leading picture may be a picture associated with an EDRAP picture. In addition, the leading picture may be a picture that precedes the EDRAP picture in decoding order but follows the EDRAP picture in output order. The leading picture may include at least one of a decodable leading picture (DADL picture) or a non-decodable leading picture (DASL picture).

### Embodiment 1

The SEI message may include at least one of a second SEI message for indicating a DASL picture or a first SEI message for indicating a DADL picture.

Table 3 shows an example of a DASL indication SEI message (DRAP-Skipped Leading Indication SEI Message), which is a second SEI message for indicating a DASL picture.

**[Table 3]**

| | |
|---|---|
| drap_skipped_indication( payloadSize ) { | **Descriptor** |
| } | |

A picture associated with a second message may be referred to as a DASL picture. A DASL picture associated with an EDRAP picture may be constrained to follow the associated EDRAP picture in decoding order but precede the EDRAP picture in output order.

In addition, any picture that is present in the same layer and follows the EDRAP picture in both decoding order and output order may be constrained so that any picture associated with the EDRAP picture or any picture that is present in the same layer and precedes the EDRAP picture in decoding order is not included in the active entry of the reference picture list. However, this constraint may not be applied to referenceablePictures.

Table 4 shows an example of a DADL indication SEI message (DADL-Decodable Leading Indication SEI Message), which is a first SEI message for indicating a DADL picture.

**[Table 4]**

| | |
|---|---|
| drap_decodable_indication( payloadSize ) { | **Descriptor** |
| } | |

A picture associated with a first message may be referred to as a DADL picture. A DADL picture associated with an EDRAP picture may be constrained to follow the associated EDRAP picture in decoding order but precede the EDRAP picture in output order.

In addition, a DADL picture associated with an EDRAP picture may be constrained to follow the DASL picture associated with the EDRAP picture in output order. In addition, a DADL picture associated with an EDRAP picture may be proposed not to refer to a DASL picture associated with the EDRAP picture or any picture that belongs to the same layer and precedes the EDRAP picture in decoding order. However, this constraint may not be applied to referenceablePictures.

### Embodiment 2

An SEI message may include a single SEI message to indicate the type of leading picture (DADL picture and DASL picture).

Table 5 shows an example of an EDRAP Leading Indication SEI message, which is an SEI message for indicating a DADL picture and a DASL picture.

**[Table 5]**

| | |
|---|---|
| edrap_leading_picture_indication( payloadSize ) { | **Descriptor** |
| **dasl_pictures_flag** | u(1) |
| } | |

In Table 5, dasl_picture_flag may indicate the type of a picture associated with an EDRAP leading indication SEI message. dasl_picture_flag equal to 1 indicates that a picture associated with an EDRAP leading indication SEI message is a DASL picture, and dasl_picture_flag equal to 0 indicates that a picture associated with an EDRAP leading indication SEI message is a DADL picture.

A picture associated with an EDRAP leading indication SEI message may be referred to as a leading picture associated with an EDRAP picture. A leading picture associated with an EDRAP picture may be decodable or non-decodable when random access is performed from the associated EDRAP picture. A decodable leading picture associated with an EDRAP picture may be referred to as a DADL picture, and a non-decodable leading picture associated with an EDRAP picture may be referred to as a DASL picture.

In addition, the following constraints may be applied to the EDRAP leading indication SEI message:
- Any DADL picture associated with an EDRAP picture may be constrained so that a DASL picture associated with the EDRAP picture or any picture that belongs to the same layer and precedes the EDRAP picture in decoding order is not included in the active entry of reference picture list. However, this constraint may not be applied to referenceablePictures.
- Any picture that belongs to the same layer and precedes the EDRAP picture in both decoding order and output order may be constrained so that a DASL picture associated with the EDRAP picture or any picture that belongs to the same layer and precedes the EDRAP picture in decoding order is not included in the active entry of the reference picture list. However, this constraint may not be applied to referenceablePictures.

### Embodiment 3

An example of an extended DRAP indication SEI message, which is an SEI message for indicating information about an EDRAP picture, is shown in Table 6.

**[Table 6]**

| | |
|---|---|
| extended_drap_indication( payloadSize) { | **Descriptor** |
| **edrap_rap_id_minus1** | u(16) |
| **edrap_leading_pictures_present_flag** | u(1) |
| if( edrap_leading_pictures_present_flag ) { | |
| **edrap_num_dadl_pictures** | u(8) |
| **edrap_num_dasl_pictures** | u(8) |
| if( edrap_num_dadl_picture != 0 && edrap_num_dasl_picture != 0) | |
| for( i = 0; i < edrap_num_dad1_picture + edrap_num__dasl_picture; i++ ) | |
| **edrap_dasl_picture_flag**[ i ] | u(1) |
| } | |
| while( !byte_aligned( ) ) | |
| **byte_alignment_bit_equal_to_zero** /* equal to 0 */ | f(1) |
| **edrap_reserved_zero_5bits** | u(5) |
| **edrap_num_refrap_pics_minus1** | u(3) |
| for( i = 0; i <= edrap_num_ref_rap_pics_minus1; i++ ) | |
| **edrap_ref_rap_id**[ i ] | u(16) |
| } | |

A picture associated with an EDRAP indication SEI message may be referred to as an EDRAP picture. The presence of an EDRAP indication SEI message may indicate constraints on the order of pictures and a reference to a picture. These constraints may enable the image decoding apparatus 200 to properly decode an EDRAP picture (decodable leading pictures associated with an EDRAP picture). Furthermore, these constraints may enable the image decoding apparatus 200 to properly decode pictures that follow in both decoding order and output order while being present in the same layer without having to decode any other pictures of the same layer except for the list of pictures referenceablePictures. Here, the list of pictures referenceablePictures may consist of a list of IRAP or EDRAP pictures in decoding order that are present in the same CLVS and are identified by the edrap_ref_rap_id[i] syntax element.

The constraints indicated by the presence of the EDRAP indication SEI message may be as follows:
- An EDRAP picture is a trailing picture.
- An EDRAP picture has a temporal sublayer identifier equal to 0.
- An EDRAP picture does not include any pictures present in the same layer as the active entry of the reference picture list, except for referenceablePictures.
- Any picture that is present in the same layer and follows an EDRAP picture in both decoding order and output order does not include a picture that is present in the same layer and precedes an EDRAP picture in decoding order or output order in the active entry of the reference picture list, except for referenceablePictures.

In addition, the following constraints applied in the conventional method may be changed to not be applied.
- A picture included in referenceablePictures does not include a picture that is present in the same layer but is not present in an earlier position in referenceablePictures in the active entry of the reference picture list. Therefore, the first picture in referenceablePictures does not include a picture from the same layer in the active entry of the reference picture list, even if the picture is an EDRAP picture rather than an IRAP picture.

In Table 6, the value of edrap_rap_id_minus1 plus 1 represents the RAP picture identifier RapPicId of the EDRAP picture. Each IRAP or EDRAP picture is related to RapPicId. The RapPicId value of the IRAP picture may be inferred to be 0. The RapPicId values for any two EDRAP pictures related to the same IRAP picture shall be different from each other.

edrap _leading_pictures_present_flag may indicate whether the EDRAP picture has one or more associated leading pictures. edrap_leading_pictures_present_flag equal to 1 may indicate that the EDRAP picture has one or more associated leading pictures, and edrap_leading_pictures_present_flag equal to 0 may indicate that the EDRAP picture does not have an associated leading picture.

edrap _num_dadl_pictures may indicate the number of DADL pictures associated with an EDRAP picture. edrap_num_dadl_pictures may have a value between 0 and 255. edrap_num_dasl_pictures may indicate the number of DASL pictures associated with an EDRAP picture. edrap_num_dasl_pictures may have a value between 0 and 255.

edrap_dasl_picture_flag[ i ] equal to 1 may indicate that the (i+1)-th picture which follows an EDRAP picture in decoding order is a DASL picture, and edrap _dasl_picture_flag[ i ] equal to 0 may indicate that the (i+1)-th picture which follows an EDRAP picture in decoding order is a DADL picture. When the value of edrap_num_dadl_pictures is 0, for i having a value between 0 and edrap_num_dasl_pictures-1, the value of edrap_dasl_picture_flag[ i ] may be inferred to be 1. When the value of edrap_num_dasl_pictures is 0, for i having a value between 0 and edrap num__dadl_pictures-1, the value of edrap_dasl_picture_flag[ i ] may be inferred to be 0.

In addition, the following constraints may be applied:
- Any DASL picture associated with an EDRAP picture shall precede the DADL picture associated with the EDRAP picture in output order.
- A DADL picture associated with an EDRAP picture shall not include any DASL picture associated with the EDRAP picture or any picture that belongs to the same layer and precedes the EDRAP picture in decoding order in the active entry of the reference picture list. However, this constraint may not be applied to referenceablePictures.
- Any picture that belongs to the same layer and follows an EDRAP picture in both decoding order and output order shall not include a DASL picture associated with the EDRAP picture or any picture that belongs to the same layer and precedes the EDRAP picture in decoding order in the active entry of the reference picture list. However, this constraint may not be applied to referenceablePictures.
- If one or more leading pictures associated with an EDRAP picture are removed (i.e., bitstream thinning by removing pictures of higher temporal sublayers), the EDRAP SEI message needs to be updated to ensure accurate information about the leading pictures associated with the EDRAP picture.

The value of edrap_reserved_zero_5bits shall be equal to 0 in the bitstream. Other values of edrap_reserved_zero_5bits are reserved for future definition, and the image decoding apparatus 200 shall ignore the value of edrap_reserved_zero _5bits.

The value of edrap_num_ref_rap_pics_minus1 plus 1 indicates the number of IRAP or EDRAP pictures that are present in the same CLVS as the EDRAP picture and may be included in the active entry of the reference picture list of the EDRAP picture.

edrap_ref_rap_id[ i ] represents the RapPicId of the i-th RAP picture that may be included in the active entry of the reference picture list of the EDRAP picture. The i-th RAP picture shall be an IRAP picture associated with the current EDRAP picture, or an EDRAP picture associated with the same IRAP picture as the current EDRAP picture.

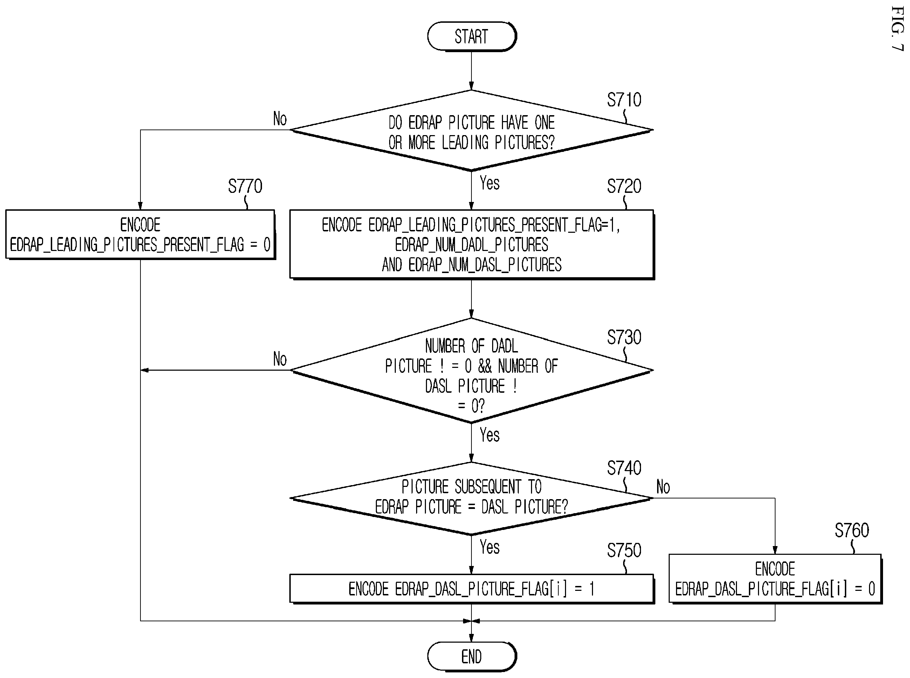

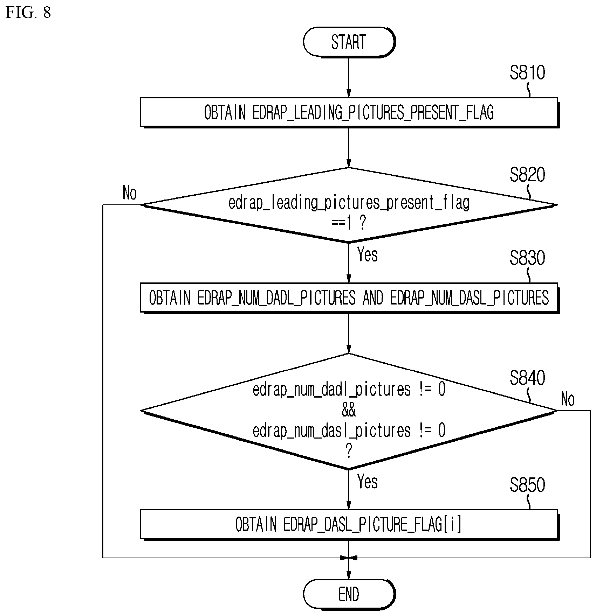

FIG. 7 is a flowchart illustrating an image encoding method according to Embodiment 3, and FIG. 8 is a flowchart illustrating an image decoding method according to Embodiment 3.

Referring to FIG. 7, the image encoding apparatus 100 may determine whether an EDRAP picture has one or more leading pictures (S710). If the EDRAP picture does not have one or more leading pictures, the image encoding apparatus 100 may encode the value of edrap_leading_pictures_present_flag as 0 (S770). Alternatively, if the EDRAP picture has one or more leading pictures, the image encoding apparatus 100 may encode the value of edrap_leading_pictures_present_flag as 1 (S720). In this case, the image encoding apparatus 100 may determine the number of DADL pictures and DASL pictures, and encode edrap_num_dadl_pictures indicating the number of DADL pictures and edrap_num_dasl_pictures indicating the number of DASL pictures (S720).

The image encoding apparatus 100 may determine the type of a picture subsequent to (following) an EDRAP picture if both the number of DADL pictures and the number of DASL pictures are not 0 (S730). The image encoding apparatus 100 may encode the value of edrap_dasl_picture_flag[i] as 1 if the type of the subsequent picture is a DASL picture (S750), and may encode the value of edrap_dasl_picture_flag[i] as 0 if the type of the subsequent picture is a DADL picture (S760). Here, i may be 0 or greater, and may be less than the sum of the number of DADL pictures and the number of DASL pictures.

The image decoding apparatus 200 may obtain edrap_leading_pictures_present_flag from a bitstream (S810) and determine the value of edrap _leading_pictures_present flag (S820). If the value of edrap_leading_pictures_present_flag is 1, the image decoding apparatus 200 may obtain edrap num__dadl_pictures indicating the number of DADL pictures and edrap_num_dasl_pictures indicating the number of DASL pictures from the bitstream (S830).

The image decoding apparatus 200 may determine whether the value of edrap_num_dadl_pictures is 0 and whether the value of edrap_num_dasl_pictures is 0 (S840). The image decoding apparatus 200 may obtain edrap_dasl_picture_flag[i] from the bitstream when both the value of edrap _num_dadl_pictures and the value of edrap_num_dasl_pictures are not 0 (S850). Here, i may be greater than or equal to 0, and may be less than the sum of the value of edrap_num_dadl_pictures and the value of edrap_num_dasl_pictures.

The image decoding apparatus 200 may determine the types of leading pictures based on edrap _num_dadl_pictures, edrap_num_dasl_pictures, and edrap_dasl_picture_flag[ i ]. For example, if the value of edrap_num_dadl_pictures is 0 and the value of edrap_num_dasl_pictures is not 0, all leading pictures may be determined to be DASL pictures. As another example, if the value of edrap_num_dadl_pictures is not 0 and the value of edrap_num_dasl_pictures is 0, all leading pictures may be determined to be DADL pictures. As another example, if the values of edrap_num_dadl_pictures and edrap_num_dasl_pictures are both 0, the type of each leading picture may be determined by the value of edrap_dasl_picture_flag[ i ].

### Embodiment 4

Another example of an extended DRAP indication SEI message, which is an SEI message for indicating information about an EDRAP picture, is shown in Table 7.

**[Tale 7]**

| | |
|---|---|
| extended_drap_indication(payloadSize ) { | **Descriptor** |
| **edrap_rap_id_minus1** | u(16) |
| **edrap_leading_pictures_idc** | u(2) |
| if{edrap_leading_pictures_idc ) { | |
| **edrap_num_leading_pictures** | u(8) |
| if( edrap_leading_pictures_idc = = 3 ) | |
| for (i = 0; i < edrap_num_leading_picture; i++ ) | |
| **edrap_dasl_picture_flag**[ i ] | u(1) |
| } | |
| while( !byte_aligned( ) ) | |
| **byte_alignment_bit_equal_to_zero** /* equal to 0 */ | f(1) |
| **edrap_reserved_zero_5bits** | u(5) |
| **edrap_num_ref_rap_pics_minus1** | u(3) |
| for( i = 0; i <= edrap_num_ref_rap_pics_minus1; i++ ) | |
| **edrap_ref_rap_id**[ i ] | u(16) |
| } | |

A picture associated with an EDRAP indication SEI message may be referred to as an EDRAP picture. The presence of an EDRAP indication SEI message may indicate constraints on the order of pictures and a reference to a picture. These constraints may enable the image decoding apparatus 200 to properly decode an EDRAP picture (decodable leading pictures associated with an EDRAP picture). Furthermore, these constraints may enable the image decoding apparatus 200 to properly decode pictures that follow in both decoding order and output order while being present in the same layer without having to decode any other pictures of the same layer except for the list of pictures referenceablePictures. Here, the list of pictures referenceablePictures may consist of a list of IRAP or EDRAP pictures in decoding order that are present in the same CLVS and are identified by the edrap_ref_rap_id[i] syntax element.

The constraints indicated by the presence of the EDRAP indication SEI message may be as follows:
- An EDRAP picture is a trailing picture.
- An EDRAP picture has a temporal sublayer identifier equal to 0.
- An EDRAP picture does not include any pictures present in the same layer in the active entry of the reference picture list, except for referenceablePictures.
- Any picture that is present in the same layer and follows an EDRAP picture in both decoding order and output order does not include a picture that is present in the same layer and precedes an EDRAP picture in decoding order or output order in the active entry of the reference picture list, except for referenceablePictures.

Additionally, the following constraints applied in the conventional method may be changed to not be applied.
- A picture included in referenceablePictures does not include a picture that is present in the same layer but is not present in an earlier position in referenceablePictures, in the active entry of the reference picture list. Therefore, the first picture in referenceablePictures does not include a picture from the same layer in the active entry of the reference picture list, even if the picture is an EDRAP picture rather than an IRAP picture.

In Table 7, the value of edrap_rap_id_minus1 plus 1 represents the RAP picture identifier RapPicId of the EDRAP picture. Each IRAP or EDRAP picture is associated with a RapPicId. The RapPicId value of an IRAP picture may be inferred to be 0. The RapPicId values of any two EDRAP pictures associated with the same IRAP picture shall be different.

edrap_leading_pictures__idc equal to 0 may indicate that the EDRAP picture has no associated leading picture. edrap_leading_pictures_idc equal to 1 may indicate that the EDRAP picture has one or more associated leading pictures, and all associated leading pictures are DADL pictures. edrap_leading_pictures_ide equal to 2 may indicate that the EDRAP picture has one or more associated leading pictures, and all associated leading pictures are DASL pictures. edrap_leading_pictures_idc equal to 3 may indicate that the EDRAP picture has one or more associated leading pictures, and the associated leading pictures are a mixture of DADL pictures and DASL pictures.

edrap_num_leading_pictures may indicate the number of leading pictures associated with an EDRAP picture. The value of edrap_num_leading_pictures may have a value between 0 and 255.

edrap_dasl_picture_flag[ i ] equal to 1 may indicate that the (i+1)-th picture following an EDRAP picture in decoding order is a DASL picture, and edrap _dasl_picture_flag[ i ] equal to 0 may indicate that the (i+1)-th picture following an EDRAP picture in decoding order is a DADL picture. When the value of edrap_leading_pictures_idc is 1, for i having a value between 0 and edrap_num_leading_pictures-1, the value of edrap_dasl_picture_flag[ i ] may be inferred to be 0. When the value of edrap _leading_pictures_idc is 2, for i having a value between 0 and edrap_num_leading_pictures-1, the value of edrap_dasl_picture_flag[ i ] may be inferred to be 1.

In addition, the following constraints may be applied:
- Any DASL picture associated with an EDRAP picture shall precede the DADL picture associated with the EDRAP picture in output order.
- A DADL picture associated with an EDRAP picture shall not include a DASL picture associated with the EDRAP picture or any picture that belongs to the same layer and precedes the EDRAP picture in decoding order, in the active entry of the reference picture list. However, this constraint may not be applied to referenceablePictures.
- Any picture that belongs to the same layer and follows an EDRAP picture in both decoding order and output order shall not include a DASL picture associated with the EDRAP picture or any picture that belongs to the same layer and precedes the EDRAP picture in decoding order, in the active entry of the reference picture list. However, this constraint may not be applied to referenceablePictures.
- If one or more leading pictures associated with an EDRAP picture are removed (i.e., bitstream thinning by removing pictures of higher temporal sublayers), the EDRAP SEI message needs to be updated to ensure accurate information about the leading pictures associated with the EDRAP picture.

The value of edrap_reservedzero_5bits shall be equal to 0 in a bitstream. Other values of edrap_reserved_zero_5bits are reserved for future definition, and the image decoding apparatus 200 shall ignore the value of edrap_reserved_zero_5bits.

The value of edrap num_refrap_pics_minus1 plus 1 represents the number of IRAP or EDRAP pictures that are present in the same CLVS as the EDRAP picture and may be included in the active entry of the reference picture list of the EDRAP picture.

edrap_ref_rap_id[ i ] represents the RapPicId of the i-th RAP picture that may be included in the active entry of the reference picture list of the EDRAP picture. The i-th RAP picture shall be an IRAP picture associated with the current EDRAP picture, or an EDRAP picture associated with the same IRAP picture as the current EDRAP picture.

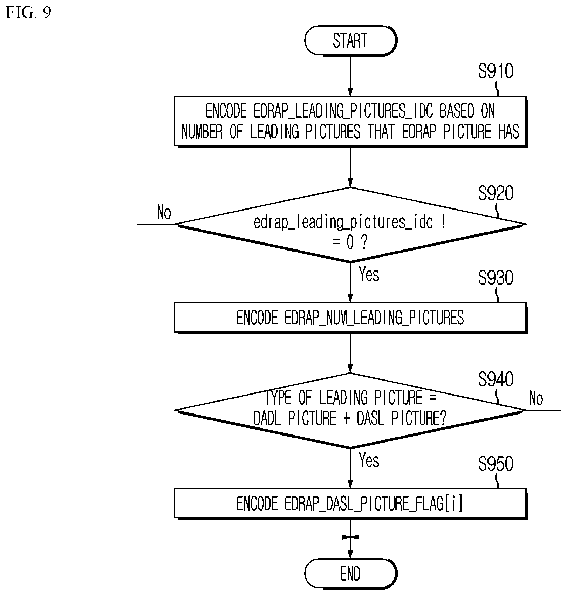

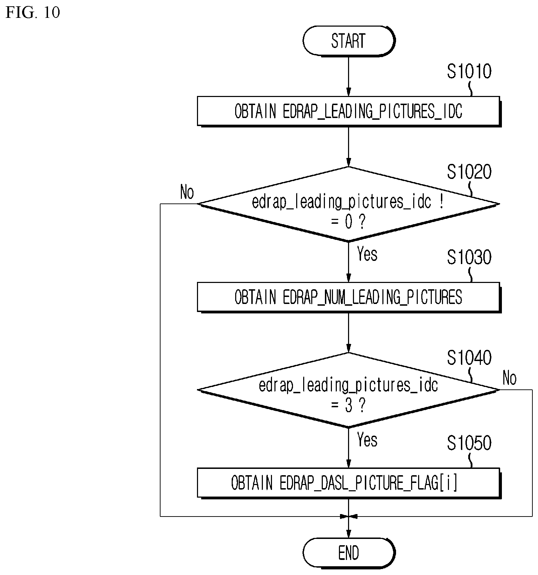

FIG. 9 is a flowchart illustrating an image encoding method according to Embodiment 4, and FIG. 10 is a flowchart illustrating an image decoding method according to Embodiment 4.

Referring to FIG. 9, the image encoding apparatus 100 may determine the number and/or types of leading pictures that an EDRAP picture has, and encode edrap_leading_pictures_idc indicating the number and/or types of leading pictures (S910). For example, if an EDRAP picture does not have an associated leading picture, the value of edrap_leading_pictures_idc may be encoded as 0, and if an EDRAP picture has one or more associated leading pictures and all associated leading pictures are DADL pictures, the value of edrap _leading_pictures_idc may be encoded as 1. Additionally, if an EDRAP picture has one or more associated leading pictures and all associated leading pictures are DASL pictures, the value of edrap_leading_pictures_idc may be coded as 2, and if an EDRAP picture has one or more associated leading pictures and the associated leading pictures are a mixture of DADL pictures and DASL pictures, the value of edrap_leading_pictures_idc may be coded as 3.

The image encoding apparatus 100 may encode edrap_num_leading_pictures indicating the number of associated leading pictures (S930) when an EDRAP picture has one or more associated leading pictures (S920, edrap_leading_pictures_idc != 0).

The image encoding apparatus 100 may encode edrap_dasl_picture_flag[i] indicating the type of each leading picture (S950) when the associated leading pictures are a mixture of DADL pictures and DASL pictures (S940). Here, i may be greater than or equal to 0 and less than the value of edrap _num_leading_pictures.

Referring to FIG. 10, the image decoding apparatus 200 may obtain edrap_leading_pictures_idc from a bitstream (S1010) and determine whether the value of edrap_leading_pictures_idc is 0 (S1020). If the value of edrap_leading_pictures_idc is not 0, the image decoding apparatus 200 may obtain edrap_num_leading_pictures from the bitstream (S1030).

The image decoding apparatus 200 may determine whether the value of edrap_leading_pictures_idc is 3 (S1040). If the value of edrap_leading_pictures_idc is 3, the image decoding apparatus 200 may obtain edrap_dasl_picture_flag[i] from the bitstream (S1050). Here, i may be greater than or equal to 0 and less than the value of edrap _num_leading_pictures.

The image decoding apparatus 200 may determine the types of leading pictures based on edrap_leading_pictures_idc and edrap_dasl_picture_flag[ i ]. For example, if the value of edrap_leading_pictures_idc is 1, all leading pictures may be determined to be DADL pictures. As another example, if the value of edrap_leading_pictures_idc is 2, all leading pictures may be determined to be DASL pictures. As yet another example, if the value of edrap_leading_pictures_idc is 3, the type of each leading picture may be determined according to the value of edrap_dasl_picture_flag[ i ].

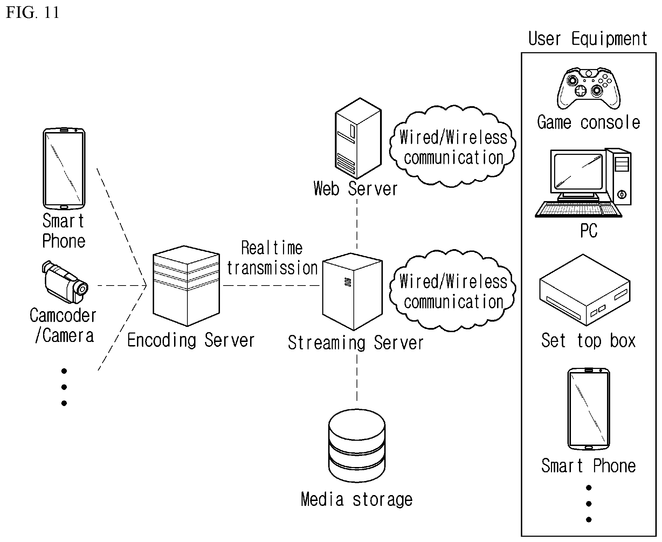

FIG. 11 is a view showing a content streaming system, to which an embodiment of the present disclosure is applicable.

As shown in FIG. 11, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to encode or decode an image.

## Claims

1. An image decoding method performed by an image decoding apparatus, the image decoding method comprising:
obtaining a supplemental enhancement information (SEI) message for an extended dependent random access point (EDRAP) picture from a bitstream; and
identifying a leading picture following the EDRAP picture in decoding order and preceding the EDRAP picture in output order, based on the SEI message,
wherein the leading picture comprises at least one of a decodable leading picture or a non-decodable leading picture.

2. The image decoding method of claim 1, wherein the non-decodable leading picture is constrained to precede the decodable leading picture in output order.

3. The image decoding method of claim 1,
wherein the decodable leading picture is constrained not to refer to the non-decodable leading picture except for predetermined pictures, and
wherein the predetermined pictures comprise an intra random access point (IRAP) picture or an EDRAP picture belonging to the same coded layer video sequence (CLVS).

4. The image decoding method of claim 1,
wherein the decodable leading picture is constrained not to refer to a picture preceding the EDRAP picture in decoding order, except for predetermined pictures, and
wherein the predetermined pictures comprise an intra random access point (IRAP) picture or an EDRAP picture belonging to the same coded layer video sequence (CLVS).

5. The image decoding method of claim 1,
wherein a picture following the EDRAP picture in decoding order and output order is constrained not to refer to the non-decodable picture, except for predetermined pictures, and
wherein the predetermined pictures comprise an intra random access point (IRAP) picture or an EDRAP picture belonging to the same coded layer video sequence (CLVS).

6. The image decoding method of claim 1,
wherein a picture following the EDRAP picture in decoding order and output order is constrained not to refer to a picture preceding the EDRAP picture in decoding order, except for predetermined pictures, and
wherein the predetermined pictures comprise an intra random access point (IRAP) picture or an EDRAP picture belonging to the same coded layer video sequence (CLVS).

7. The image decoding method of claim 1, wherein the SEI message comprises a first SEI message for indicating the decodable leading picture.

8. The image decoding method of claim 1, wherein the SEI message comprises a second SEI message for indicating the non-decodable leading picture.

9. The image decoding method of claim 1, wherein the SEI message comprises a syntax element indicating whether the EDRAP picture comprises the leading picture.

10. An image encoding method performed by an image encoding apparatus, the image encoding method comprising:
identifying a leading picture following an extended dependent random access point (EDRAP) picture in decoding order and preceding the EDRAP picture in output order; and
encoding a supplemental enhancement information (SEI) message for the EDRAP picture based on a result of identifying the leading picture,
wherein the leading picture comprises at least one of a decodable leading picture or a non-decodable leading picture.

11. A method of transmitting a bitstream generated by an image encoding method, the image encoding method comprising:
identifying a leading picture following an extended dependent random access point (EDRAP) picture in decoding order and preceding the EDRAP picture in output order; and
encoding a supplemental enhancement information (SEI) message for the EDRAP picture based on a result of identifying the leading picture,
wherein the leading picture comprises at least one of a decodable leading picture or a non-decodable leading picture.
